# EUROPEAN PATENT APPLICATION

(11) **EP 1 343 098 A1**
(43) Date of publication of application: **10.09.2003**
(21) Application number: 02354042.0
(22) Date of filing: 07.03.2002
(51) Int. Cl.: G06F 17/30

(54) **Improvements relating to network environments and location of resources therein**

(71) Applicant: Hewlett-Packard Company, Palo Alto, CA 94304 (US)
(72) Inventor: Celle, Benoît, 38240 Meylan (FR)
(74) Representative: Lloyd, Richard Graham

(57) **Abstract**

A network environment (20) having a plurality of network resources (21-28), some of the inter-resource relationships being categorised, whereby location of a desired resource (21-28) may be effected by employing a categorical search parameter and dispatching the search request across the network (20) such that the request is only propagated between resources (20-28) where an appropriate inter-resource relationship is found to exist.

## Description

### Description of and Background to the Invention

This invention relates to the general field of computer networks and relates, in particular, although by no means exclusively, to systems of the type with which information, utilities and physical entities, for example (known collectively as "resources"), may be located within such an environment.

### Summary of the Prior Art

In the field of computer networks, a primary requirement is that resources provided on the network should be readily locatable by a user or client application, for example, so that the facilities provided by or available from a given resource can be accessed and made use of. Where the network environment is local (e.g. contained within a small office), location of such resources such as a particular printer, scanner or PC, for example, may present few difficulties, but far greater problems are encountered when the network extends across a wide area such as in the case of a Wide Area Network (WAN) encompassing several corporate locations and, especially, in the case of the Internet.

Where it is necessary to locate a particular resource on such a relatively large network, it is unlikely that the user concerned will know the resource's whereabouts (both from a geographical and network topological viewpoint) and it thus becomes necessary to use search or discovery utilities to identify and establish the location of a particular desired resource.

In Internet environments, this is usually performed with the use of search engines - software applications that are dedicated to the identification and retrieval of Internet resources such as web pages, for example. Although a large number of search engines are known and widely used, the ever-expanding nature of the Internet and relatively crude manner in which the searches are performed, means that their performance can be somewhat limiting, especially when relatively little ISP bandwidth is available. In an attempt to alleviate this, many search engines restrict their searches to limited parts of the Web, meaning that the results obtained are often far from complete.

A different approach to the location of network resources centres around a number of discovery protocols which allow network resources to advertise their presence and functionality to other network resources with the advertised resource information being contained within a generally centralised directory. In essence, the directory receives resource requests from a resource seeker (such as a user or other hardware/software resource) with a dedicated Directory Agent being used to locate an appropriate Service Agent within the directory and thus to effect a connection between the seeker and an appropriate resource. A pertinent example of such directory-based discovery protocols is the Service Location Protocol (SLP) provided by Sun Microsystems, which, in many environments, provides a satisfactory and efficient solution to the resource location problem. However, all such approaches suffer from the key disadvantage that a centralised directory must be maintained, which adds considerably to implementation and support costs.

In an Internet environment, a number of centralised and server-based resource location utilities exist, of which Napster (www.napster.com) is a good example. In brief, servers operated by Napster store information and the location of a variety of files (principally MP3 music files) with this information allowing a user to connect directly to another user's PC whereby a download of a particular music file may be effected.

However, the burden of installing and maintaining high-capacity servers is a heavy one, not least from a cost viewpoint, and a recent trend in Internet resource location has therefore been towards decentralised systems which do not require the presence of server-based resource directories. Gnutella (see www.gnutella.co.uk) is a fully-distributed data-sharing technology that operates on a peer-to-peer basis whereby the requirement of a centralised resource directory is obviated. In brief, every client (e.g. a user's PC) connected to the network at any given time acts as a network node, receiving and forwarding resource requests to its immediate neighbours. Thus, a search initiated by a single client may be propagated across a vast network of clients (and thus potential resources) with there being no requirement to maintain any central list of the resources available at that moment.

Hewlett-Packard Company's "Cooltown" vision, in which physical entities such as people, places and things are all provided with a web presence, allows this propagation-based resource location to be taken one step further. HP Technical Report HPL-2000-67 (Uniform Web Presence Architecture for People, Places and Things - Debaty and Caswell) explains how such web presences can be used to establish virtual connections between a number of physical entities, with a key aspect of the architecture concerned being the provision, in conjunction with each network entity, of a highly localised and fluid directory that records relationships with other presences, with related entities of this kind being known as "resources" of the current entity.

In addition to recording the location (e.g. URL) of its various resources, the directory may also cache a description (e.g. an XML description) of the resources, whereby a query passed to a given entity may be addressed in a more efficient manner.

However, all the systems, utilities and architectures discussed thus far suffer from the disadvantage of providing only a somewhat "broad-brush" approach to resource location, meaning that many of the resources located may not in fact be helpful or appropriate to the user's requirements, with an object of the present invention thus being to provide a network environment and a resource location system that overcome or at least reduce these problems.

### Summary of the Invention

In accordance with a first aspect of the present invention, there is provided a network environment having a plurality of network resources, some of the inter-resource relationships being categorised, whereby location of a desired resource may be effected by employing a categorical search parameter and dispatching the search request across the network such that the request is only propagated between resources where an appropriate inter-resource relationship is found to exist.

It will be understood, in the light of the foregoing, that the term "categorical" should be interpreted in the sense of "relating to or included in a category", in that the search parameter is related to or otherwise associated with a particular category of inter-resource relationship. For the avoidance of doubt, therefore, the term "categorical" is not intended to be understood in its alternative sense of "unqualified", "unconditional" and the like.

Each network resource may include a resource description and a directory of neighbouring resources, the directory containing the location of the neighbouring resources and the category of each inter-resource relationship.

Some of the inter-resource relationships may fall within more than one category.

Some of the network resources may be associated with physical entities, and the inter-resource relationships existing between said resources may be categorised on a physical proximity basis.

The network topology may be dynamic, in that each resource, on being introduced to the network, is operative to disclose, to at least part of the network, its location and description and the category of the inter-resource relationship that exists between it and a neighbouring resource.

The disclosure may be effected using a resource advertising agent.

Each resource description may contain a plurality of fields, the category of inter-resource relationship being established by comparing the values of at least some of the fields with the values of corresponding fields of a neighbouring resource description.

In its first aspect, therefore, the invention provides a network environment in which the network resources have identifiable relationships with neighbouring resources which allow propagated resource searches to be conducted employing search parameters that are tailored in accordance with a desired inter-resource relationship.

Thus, where a geographical relationship exists between two resources (in that they are physically located near one another, such as in the same building, for example) a search request is able to specify that the request should only be propagated (i.e. forwarded) by a network resource to another resource where that resource enjoys a geographical relationship with its neighbour.

As will be appreciated, the ability to set search limitations in this way not only expedites the search procedure but also has the benefit of maximising the likelihood of a located network resource truly being appropriate and useful to the searcher. In essence, therefore, the network environment, configured in this way, allows a user to set a personalised search horizon which enables a resource location operation to be effected in a more expeditious and targeted manner.

In hand with that, a second aspect of the present invention provides a system for locating a resource within a network environment, comprising generating a search request, the request specifying a desired resource and a categorical search parameter, and effecting propagation of the search request across the network, the search request only being forwarded between network resources where the resources have an inter-resource relationship corresponding to the categorical search parameter.

The system may also comprise displaying to a user of the system, a graphical representation of those network resources to which the search request has been forwarded.

Each resource, upon receiving the search request, may be tagged or otherwise marked to prevent repeat receipts, by that resource, of the same search request.

The graphical representation may be illustrative of a user-defined horizon and, in the event that the desired resource is not located within the horizon, the search may be repeated from a neighbouring resource that does not have the specified inter-resource relationship with that of the user.

The search may be repeated, with substantially no user intervention, from adjacent resources, until the desired resource is located.

A propagation limit may be employed, whereby propagation of the search request is stopped, paused or restricted when the request has been forwarded to a user-specified extent.

The propagation limit may be expressed in terms of a number of network nodes, through which the search request has been forwarded.

The resources may be associated with physical entities and the propagation limit may be expressed in terms of a maximum distance between a user and the desired resource.

The system may comprise conveying, to a user of the system, information concerning the category or categories of any inter-resource relationships existing between a user resource and any neighbouring resources.

The information may be conveyed visually, by way of a dialogue box, pop-up box, drop-down menu or the like, whereby the user may effect a modified search by altering the categorical search parameter.

### Brief Description of the Drawings

The invention will now be described in greater detail, but strictly by way of example, by reference to the accompanying drawings, of which:
FIGURE 1 is a schematic representation of a prior art peer-to-peer networked brokering system;
FIGURE 2 is a schematic illustration, in accordance with the present invention, of a network environment showing inter-resource relationships;
FIGURE 3 illustrates, again in schematic form, a number of network resources and local resource directories;
FIGURE 4 is a schematic illustration of a specific application of the present invention;
FIGURE 5 shows a hyperbolic tree as a graphical representation of a number of network resources; and
FIGURE 6 is an example of a drop-down menu showing the categories of inter-resource relationships existing between a root resource and neighbouring resources.

### Detailed Description of the Drawings and Best Mode of the Invention.

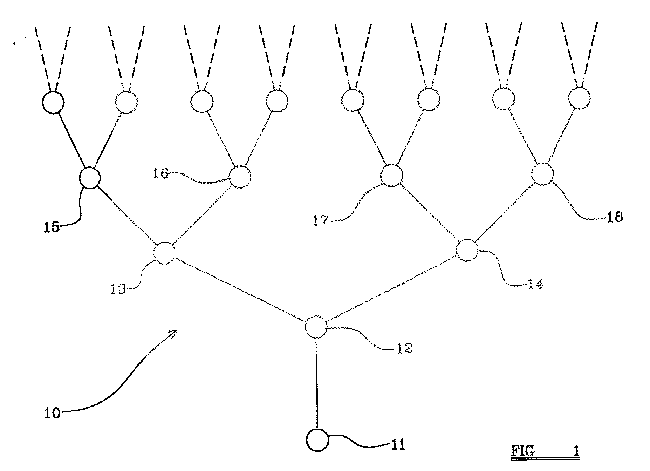

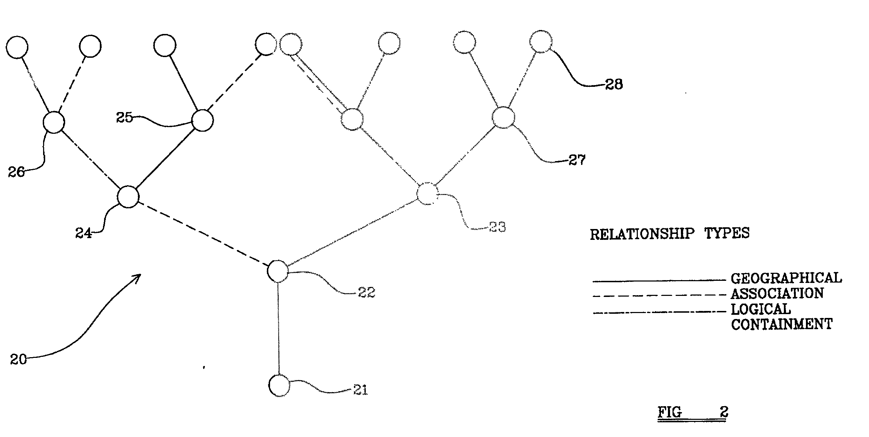

Referring first to Figure 1 - a schematic illustration of a conventional (prior art) peer-to-peer network 10 - this shows a number of inter-connected network nodes, which may be physical entities such as PC's, printers, scanners and the like, but which may also comprise software representations (e.g. Internet web presences) of such physical entities. Propagation-based resource location using such peer-to-peer topologies is exemplified by the Gnutella information-sharing technology (see www.gnuttella.co.uk), in which the client software acts both as a mini (local) search engine and file serving system in one. Thus, using such a peer-to-peer architecture, a search transmitted from a user's root node 11 is first transmitted to the user's immediately neighbouring node 12, from which it is then propagated to neighbouring nodes 13/14, 15/16, 17/18 and so on. Each time the request is forwarded, the information transmitted includes details of the forwarding node to enable a return path to be established, stepwise, to the root node 11, if and when the sought resource is located. Thus, a search initiated using a Gnutella-type architecture results in the search request being forwarded by a given resource to all neighbouring resources. Figure 2, the disclosures of which are within the scope of the present invention, illustrates a peer-to-peer (hence decentralised) network architecture 20, but in which the various inter-resource relationships are categorised, thus allowing the relationships to be distinguished from one another. Thus, a user's root resource 21 has a geographical inter-resource relationship with its neighbouring resource 22, shown by a solid interconnecting line. Resources 22 and 23 also have a geographical inter-resource relationship, whereas resources 22 and 24 do not: in this case, the inter-resource relationship is of an "association" type. Similarly, whilst resources 24 and 25 have a geographical inter-resource relationship, resources 24 and 26 have a "logical proximity" relationship, as do resources 27 and 28.

Whilst it will be understood that the definition and scope of such inter-resource relationships may be variable, and that a wide variety of different types are envisaged, a "geographical" relationship, in this example, is intended to illustrate that the thus-linked resources are physically close (i.e. geographically near) to one another. Thus, where the root resource 21 is (or, in a software context, is representative of) a particular office building, resource 22 may comprise (or be representative of) a room within that building, with resources 23 and 27 perhaps being (or being representative of) partitions in that room and physical entities (e.g. computer hardware) in that partition. "Association" relationships may be logical, in that a product resource may be linked to information concerning the manufacturer of that resource, or responsibility-based, for example, in that a product resource may be linked to that of a person or team responsible for the upkeep of the product concerned. "Logical containment" relationships may exist between, say, a research team resource and a software representation (e.g. web presence) of a member or leader of the team.

Whilst the network resources exemplified in Figure 2 may constitute physical entities (such as items of computer hardware), the invention lends itself particularly well to the software representation of physical entities such as people, places and things. Specifically, the invention is inherently compatible with Hewlett-Packard's "Cooltown" vision, in that people, places and things all have a web representation (i.e. Website), with links being provided between the various web representations whereby information can be obtained relating to the physical entities themselves.

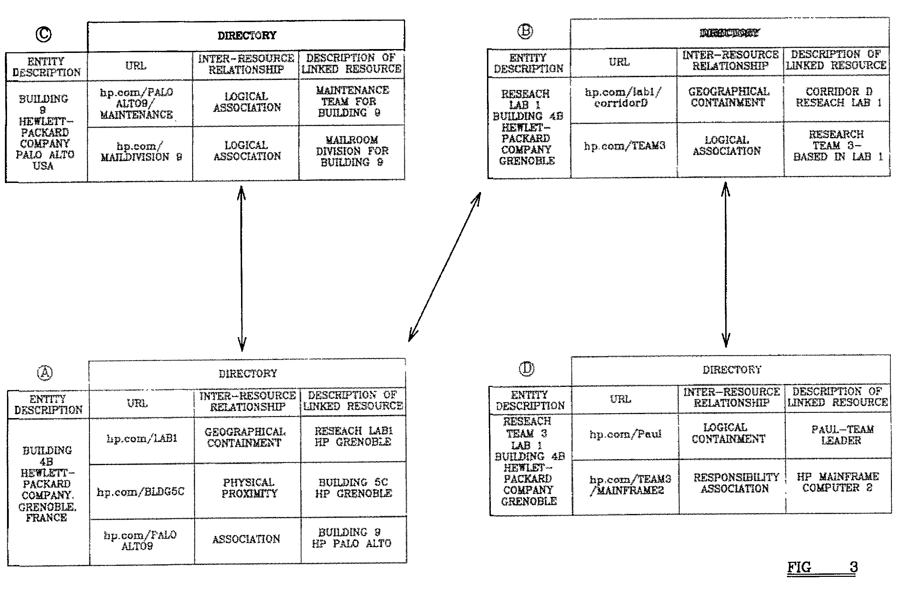

As shown in Figure 3, each node of the network has associated with it a web presence (URL) that, when accessed, provides information not only on the resource itself but also concerning any neighbouring resources that are linked to it. Figure 3, shows, in somewhat schematic form, how web representations may be established. The four resources exemplified (A, B, C and D) each have their own web presence, accessible via a dedicated URL, with the software representations also including a localised and dynamic directory in which is contained a number of links to other resource representations, shown in this example in the form of URL's. Each directory also includes a description of the various inter-resource relationships and a description of the linked resources themselves. Thus, resource A (a web representation of Building 4B of Hewlett-Packard Company, in Grenoble, France), is linked to the web presence of Research Lab 1, Building 5C and Building 9 in Palo Alto. In the first case, a "geographical containment" relationship exists, as Research Lab 1, being based at the Grenoble site, is contained within Building 4B. In the second case, Building 5C, whilst not within Building 4B, is physically close, and a "physical proximity" relationship thus exists. Building 9 in Palo Alto (USA) is neither contained within or physically close to Building 4B in Grenoble, but houses similar research teams and an "association" relationship thus exists.

In a static network environment (in which the capabilities and locations of the various resources do not change), the directories of the various resources may be pre-programmed. Dynamic network topologies, on the other hand, present more of a challenge. In the latter case, procedures are envisaged whereby neighbouring entities may be registered (as they join the network) and unregistered (as they leave the network) as linked resources, in the various local directories. Such updating procedures may be effected manually but an automatic registration procedure using external automatic discovery mechanisms is likely to be greatly preferred. To that end, generally conventional discovery mechanisms such as SLP (Service Location Protocol), Blue Tooth SDP (Service Discovery Protocol) and Microsoft UPnP (Universal Plug and Play) may conveniently be employed, with each of these mechanisms being based both on spontaneous resource discovery and discovery upon request.

It is also envisaged that neighbouring resources may compare values of relationship attributes with each other to enable appropriate inter-resource relationships to be identified: thus, when introduced to a network, a particular resource may advertise its location, the research team with which it is used, and its manufacturer, for example, with these attributes then being compared with a corresponding attribute list of a neighbouring resource. Where a match exists (e.g. the physical locations of the resources are found to tally) then a physical proximity relationship can be identified, for example.

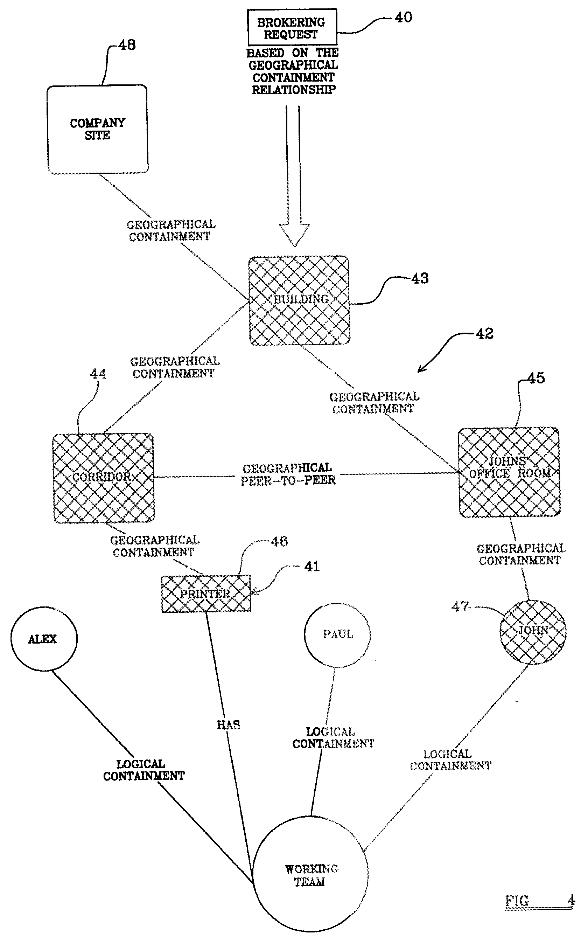

Figure 4 shows how the architecture described thus far allows resource searching and location to be expedited and made more efficient, by selective use of appropriate inter-resource relationships.

In the example shown, a brokering resource request 40, concerning a particular type of printer, is generated in and dispatched from a networked PC (not shown) across a corporate network environment illustrated generally at 42. In a manner akin to Hewlett Packards "Cooltown" vision, physical entities associated with the network are provided with software representations, in this case on the Internet, such that a building web presence 43, a corridor web presence 44, an office room web presence 45, a printer web presence 46 and an individual's web presence 47 are accessible via the network architecture.

The resource request 40, in addition to specifying the nature of the resource sought, also specifies at least one (in this case one) type of inter-resource relationship to limit the number of network nodes (i.e. other resources) to which the request is propagated. This specified inter-resource relationship thus constitutes a "categorical" search parameter, in that the parameter limits the degree to which the search is propagated by ensuring that it is only forwarded to resources where an appropriate category of inter-resource relationship exists. In the example shown, the relationship chosen is "geographical containment", meaning that the resource request is only forwarded from node-to-node where the neighbouring (downstream) node is representative of a resource that geographically is contained within the resource of the current (root) resource. Thus, the resource request 40 is forwarded from resource 43 to resources 44 and 45 but not to resource 48 (a software representation of the overall company site) as the company site is not "contained within" the building to which the resource 43 relates. Similarly, the resource request 40 is forwarded by the resource 45 to resource 47, and by resource 44 to resource 46, relating to a printer 41, which turns out to be the actual resource sought. During each propagation step, details of the propagating resource are forwarded to the recipient resource such that a return path may be established from the located resource (46) back to the user's PC, whereby the user may make use of the resource concerned.

As will thus be appreciated, selection of a particular inter-resource relationship prior to effecting propagation of the search restricts the number of network resources to which the search is passed which, in turn, not only expedites the search process but improves the likelihood of a returned resource actually being relevant - and hence useful - to the instigator of the search.

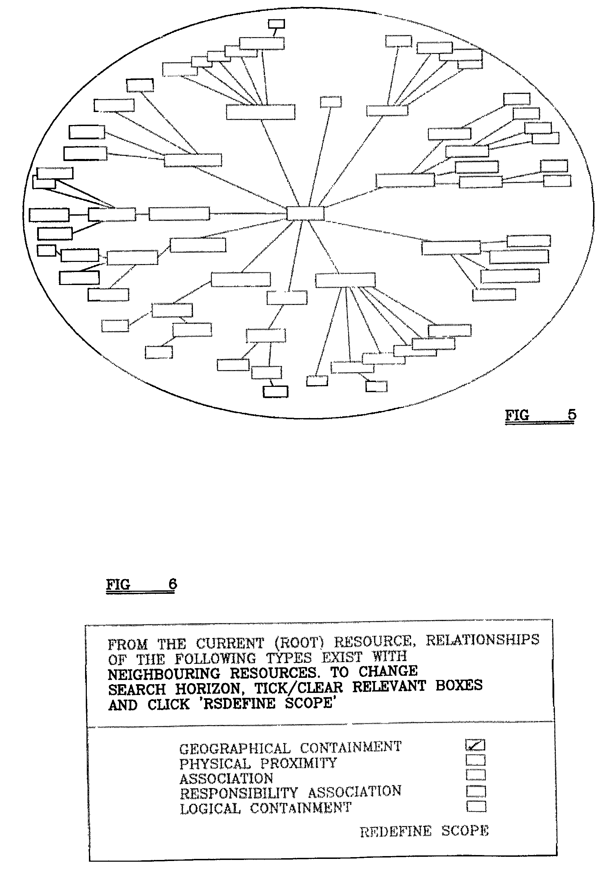

In order to provide a visual representation of the search path, the network nodes (resources) to which the search request has been propagated may be displayed graphically, such as by the use of a hyperbolic tree of the type shown in Figure 5. Hyperbolic trees are well known in themselves (see, for example, HP Technical Report HPL-2000-8 [Navigating Large Hierarchical Space Using Invisible Links] - Hao et al) and are often used to assist network searchers in visualising available propagation routes which may assist in a sought resource being located. Their use in conjunction with the present invention allows a user-defined horizon to be set, in that selection of a particular type (or perhaps types) of inter-resource relationship limits the number of nodes to which the search request is propagated, and thus the number of nodes which are displayed graphically on the searcher's screen.

It is envisaged that the displayed resources may be navigated in a number of different manners, with the approaches differing in the level of user intervention that is involved.

In a first usage mode (user-driven navigation), an automatically computed view, as per Figure 5, for example, is displayed in accordance with the user's current horizon, with the horizon having been determined by the scope of the search conducted, which in turn is delimited by the user's choice of inter-resource relationship or relationships.

Thus, as the search request is only propagated to neighbouring network nodes where the selected inter-resource relationship exists, only a small proportion of the network resources are likely to be displayed at any one time, thus reducing the likelihood of a cluttered graphic representation being produced. Selection of an appropriate resource from the displayed resources is up to the user, with the user thus being able, for example, to double-click over or otherwise select an appropriate resource icon, with this action perhaps calling up the web presence (e.g. web page) of the associated physical entity. Alternatively, the user is able to switch to a neighbouring view, by repeating the search from a different root resource. Selection of the new root (search starting point) may be effected, for example, by performing a single mouse click over the resource concerned. With this approach, the user's knowledge can be used to hone (ie. improve the quality of) the results of the search. Thus, for example, where a particular network printer is being sought, if the current horizon does not show an obviously pertinent resource, but does include, for example, the web presence of the printer's manufacturer, re-computing the search from the manufacturer's resource may well result in the desired (printer) resource being located. This combination, using both human knowledge and machine capabilities, thus allows relatively rapid identification of a sought resource.

Where more automated brokering is required, however, an appropriate (and generally conventional) brokering algorithm may be used comprehensively to explore all the resources within the current horizon. Where no resource match is found, the algorithm may recursively (ie. from a "rearward" starting point) propagate the search request to all neighbouring views by repeating the search, on an automated basis, from a number of different root resources. A variant of this automated brokering approach uses a so-called "Plan Generation" algorithm which, in generally conventional form, effects repeat propagation of the search in a more "intelligent" manner.

Whichever approach is used, each resource, on receiving the search request, is electronically tagged, flagged or otherwise marked to indicate that the search request has been received by it, with the mark serving to prevent the same request being sent back to the marked resource by a neighbour, for example. Thus, circular referencing can be avoided.

In order to tailor the scope of the network search, the user may be provided with an option to vary the selected inter-resource relationships, thus restricting or broadening the scope of the search carried out.

Figure 6 shows an example of a drop-down menu which illustrates, to the searcher, the various types of inter-resource relationships that exist from the current (root) resource to neighbouring resources.

Such a "filter" may be used to redefine the scope of any search carried out and may also be used to set a limit on the extent to which the search request is propagated. Thus, although not shown in Figure 6, a user may opt, for example, to allow only 50 "hops" (i.e. forwarding steps) to be taken, thus minimising the "clutter" of the resulting graphical representation.

Overall, the invention provides a network environment and resource location system that offers a number of important advantages over prior approaches. First of all, as the invention does not rely upon the provision of a centralised resource directory, it is comparatively "light-weight" with local "resource-based" directories being used during each propagation step. Moreover, the categorised inter-resource relationships allow a resource search to be streamlined and carried out in an expeditious manner, with this also having the advantage of maximising the relevance of any located resources.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A network environment having a plurality of network resources, some of the inter-resource relationships being categorised, whereby location of a desired resource may be effected by employing a categorical search parameter and dispatching the search request across the network such that the request is only propagated between resources where an appropriate inter-resource relationship is found to exist.

2. A network environment according to Claim 1 wherein each network resource includes a resource description and a directory of neighbouring resources, the directory containing the location of the neighbouring resources and the category of each inter-resource relationship.

3. A network environment according to Claim 1 or Claim 2 wherein some of the inter-resource relationships fall within more than one category.

4. A network environment according to Claim 1, Claim 2 or Claim 3 wherein some of the network resources are associated with physical entities and wherein the inter-resource relationships existing between said resources are categorised on a physical proximity basis.

5. A network environment according to any one of the preceding claims wherein the network topology is dynamic, in that each resource, on being introduced to the network, is operative to disclose, to at least part of the network, its location and description and the category of the inter-resource relationship that exists between it and a neighbouring resource.

6. A network environment according to Claim 5 wherein the disclosure is effected using a resource advertising agent.

7. A network environment according to Claim 5 or Claim 6 wherein each resource description contains a plurality of fields, the category of inter-resource relationship being established by comparing the values of at least some of the fields with the values of corresponding fields of a neighbouring resource description.

8. A system for locating a resource within a network environment, comprising generating a search request, the request specifying a desired resource and a categorical search parameter, and effecting propagation of the search request across the network, the search request only being forwarded between network resources where the resources have an inter-resource relationship corresponding to the categorical search parameter.

9. A system according to Claim 8 comprising displaying, to a user of the system, a graphical representation of those network resources to which the search request has been forwarded.

10. A system according to Claim 8 or Claim 9 wherein each resource, on receiving the search request, is tagged or otherwise marked to prevent repeat receipts, by that resource, of the same search request.

11. A system according to Claim 9 or Claim 10 wherein the graphical representation is illustrative of a user-defined horizon and wherein, in the event that the desired resource is not located within the horizon, the search is repeated from a neighbouring resource that does not have the specified inter-resource relationship with that of the user.

12. A system according to Claim 11 wherein the search is repeated, with substantially no user intervention, from adjacent resources, until the desired resource is located.

13. A system according to any one of Claims 8 to 12 wherein a propagation limit is employed, whereby propagation of the search request is stopped, paused or restricted when the request has been forwarded to a user-specified extent.

14. A system according to Claim 13 wherein the propagation limit is expressed in terms of a number of network nodes through which the search request has been forwarded.

15. A system according to Claim 13 or Claim 14 wherein the resources are associated with physical entities and wherein the propagation limit is expressed in terms of a maximum distance between a user and the desired resource.

16. A system according to any one of Claims 8 to 15 further comprising conveying, to a user of the system, information concerning the category or categories of any inter-resource relationships existing between a user resource and any neighbouring resources.

17. A system according to Claim 16 wherein the information is conveyed visually, by way of a dialogue box, pop-up box, drop-down menu or the like, whereby the user may effect a modified search by altering the categorical search parameter.
